# EUROPÄISCHE PATENTANMELDUNG

(11) **EP 0 523 577 A2**
(43) Veröffentlichungstag der Anmeldung: **20.01.1993**
(21) Anmeldenummer: 92111844.4
(22) Anmeldetag: 11.07.1992
(51) Int. Cl.: F16B 31/00, B60G 7/02, B60G 9/02, F16C 11/04

(54) **Verbindung zwischen Bolzen und Tragteil sowie Pendellagerung**

(30) Priorität: 17.07.1991 DE 4123624
(71) Anmelder: DEERE & COMPANY, Moline, Illinois 61265 (US)
(72) Erfinder: Walter, Bernhard, W-6803 Neckarhausen (DE)
(74) Vertreter: Feldmann, Bernhard

(57) **Zusammenfassung**

Die Verbindung zwischen einem überstehenden Bolzen (52, 54) und einem Tragteil (48, 50), die der Aufnahme von im wesentlichen quer zur Bolzenachse eingeleiteten Kräften dient, wird so ausgebildet, daß der Bolzen (52, 54) einen Bund (60, 62) enthält, dessen zum Tragteil (48, 50) gewandte Fläche mittels einer Schraubverbindung gegen eine Oberfläche (68, 70) des Tragteils (48, 50) gepreßt wird, wobei die Schraubverbindung eine zentral im Bolzen (52, 54) verlaufende und mit dem Tragteil (48, 50) zusammenwirkende Schraube (72, 74) aufweist.

Derartige Verbindungen werden für die Pendellagerung einer Fahrzeugachse, insbesondere der Vorderachslagerung eines landwirtschaftlichen oder Nutzfahrzeuges, mit wenigstens einer zwischen einem Achsträger (48, 50) des Fahrzeuges und der Fahrzeugachse (40) angeordneten schwenkbaren Bolzenverbindung (44, 46), nutzbar gemacht.

## Beschreibung

Die Erfindung betrifft die Verbindung zwischen einem Bolzen und einem Tragteil, wobei wenigstens ein Teil des Bolzens über die Oberfläche des Tragteils hinausragt und zur Aufnahme wenigstens eines Bauteils, durch das im wesentlichen quer zur Bolzenachse wirkende Kräfte einleitbar sind, geeignet ist. Ferner betrifft die Erfindung die Pendellagerung für eine Fahrzeugachse, insbesondere für die Vorderachse eines landwirtschaftlichen oder Nutzfahrzeuges, mit wenigstens einer zwischen einem Achsträger des Fahrzeuges und der Fahrzeugachse angeordneten schwenkbaren Bolzenverbindung, bei der ein Bolzen starr mit dem Achsträger oder mit der Fahrzeugachse verbunden ist und in eine Ausnehmung der Fahrzeugachse oder des Achsträgers eingreift.

Es ist bekannt, die Verbindung eines Bolzens mit einem Tragteil durch eine Preßpassung herzustellen, indem ein Schaft des Bolzens in eine entsprechende Bohrung im Tragteil eingepreßt wird. Soll der Bolzen hohe, quer zur Bolzenachse wirkende Kräfte aufnehmen, so muß eine Mindesteinpreßtiefe gegeben sein, um eine sichere Verbindung zu gewährleisten. Dies hat zur Folge, daß eine ausreichende Dicke des Tragteils gegeben sein muß.

Derartige bekannte Verbindungen finden beispielsweise bei der Pendellagerung der Vorderachse eines Ackerschleppers Anwendung, bei der ein Pendelbolzen in den Vorderachsträger eingepreßt ist. Über den Pendelbolzen ist der Achskörper mit seiner Bohrung aufschiebbar. Zur Aufnahme des Schleppergewichtes ist eine hohe Kräfte aufnehmende Preßpassung erforderlich, bei der die Mindesteinpreßtiefe von etwa dem einfachen des Bolzendurchmessers eingehalten werden muß. Daher muß die Aufnahme des Vorderachsträgers eine entsprechende Materialstärke und Materialqualität aufweisen.

Die mit der Erfindung zu lösende Aufgabe wird darin gesehen, eine kraftschlüssige Verbindung der eingangs genannten Art anzugeben, die lösbar und für relativ dünne Tragteile, an die geringe Materialqualitätsanforderungen gestellt werden, geeignet ist.

Die Aufgabe wird erfindungsgemäß dadurch gelöst, daß der Bolzen einen Bund enthält, dessen zum Tragteil gewandte Fläche mittels einer Schraubverbindung gegen eine Oberfläche des Tragteils gepreßt wird, wobei die Schraubverbindung eine zentral im Bolzen verlaufende und mit dem Tragteil zusammenwirkende Schraube aufweist. Hierbei wird die Schraube lediglich auf Zugspannung, nicht aber durch Scherkräfte beansprucht.

Die erfindungsgemäße Verbindung ist lösbar. Bei ihr werden die Momente, die infolge der quer zur Bolzenachse wirkenden Kräfte auftreten, nicht innerhalb einer Preßpassung aufgenommen. Vielmehr stützt sich der Bolzen durch den an ihm angeformten Bund auf der Oberfläche des Tragteils ab. Dies wird durch das Anpressen des Bolzens an das Tragteil mittels einer, wenn erforderlich, hochfesten Schraube ermöglicht. Die Querkräfte werden durch Reibschluß zwischen dem Bund und der Oberfläche des Tragteils aufgenommen. Für die von dem Bolzen auf das Tragteil übertragbaren Kräfte ist die Dicke des Tragteils nicht ausschlaggebend.

Im zentralen Bereich des Bolzens läßt sich, selbst wenn der Bund in radialer Richtung relativ schmal ist, eine kräftige Schraubverbindung in Form einer Schraube unterbringen. Dies ermöglicht die Übertragung großer axialer Druckkräfte, durch die der Bund auf die Oberfläche des Tragteils gedrückt wird. Mit steigender Druckkraft steigen sowohl die aufnehmbaren Momente als auch der Reibschluß und damit auch die aufnehmbaren Querkräfte.

Gemäß einer vereinfachten Betrachtung bildet sich aufgrund der Zugspannung der Schraubverbindung auf der Anlagefläche zwischen Bund und Tragteil ein homogenes Druckspannungsfeld aus. Diesem Druckspannungsfeld überlagert sich im Biegebelastungsfall das für die Biegebeanspruchung typische Zug-Druck-Spannungsfeld (Superpositionsprinzip).

Das homogene Druckspannungsfeld soll ausreichend groß gewählt werden, damit bei maximaler Biegebeanspruchung in jedem Bereich der Anlagefläche die Druckspannung durch die Schraubverbindung größer ist als die Biegespannung. In extremen Fällen ist durch die Verbindung jedoch auch eine Biegebeanspruchung aufnehmbar, die zu einer einseitigen teilweisen Abhebung des Bundes von der Tragplatte führt. Festigkeitssteigernd für den Bolzen wirkt sich zudem die durch die Schraubenvorspannungskraft im Bolzen erzeugte Druckvorspannung aus.

Zweckmäßigerweise enthält der Bolzen einen zylindrischen Zapfen zur Aufnahme des Bauteils. Dieser Zapfen kann in eine Bohrung des die Querkräfte einleitenden Bauteils eingesteckt werden. Dabei kann die Verbindung zwischen Bolzen und dem Bauteil so ausgebildet werden, daß sich das Bauteil um die Bolzenachse verschwenken läßt. Diese Ausbildung eignet sich für die Pendellagerung einer Fahrzeugachse. Bei einer kostengünstigen Ausbildung ist der gesamte Bolzen mit Bund und Zapfen als Drehteil ausgebildet.

Gemäß einer bevorzugten Ausgestaltung der Erfindung ist zwischen der Rückseite des Tragteils und dem Schraubenkopf bzw. einer auf die Schraube aufschraubbaren Mutter eine Scheibe angeordnet. Die an dem Tragteil anliegende Fläche der Scheibe ist zur Erzielung gleicher Flächenpressungen in etwa gleich groß wie die auf der anderen Seite an dem Tragteil anliegende Bundfläche. Die Scheibe dient der großflächigen Krafteinleitung in das Tragteil und ist insbesondere bei relativ dünnen Tragteilen und geringen Materialqualitäten von Vorteil.

Vorzugsweise ist eine weitere Scheibe vorgesehen, die mit der Schraube am freien Ende des Bolzens befestigbar ist und die sich radial über den Bolzenquerschnitt hinausragend erstreckt. Hierdurch kann das Bauteil zwischen Bund und Scheibe entweder fest eingespannt oder mit einem axialen Spiel, das eine Drehbewegung des Bauteils um die Zapfenachse zuläßt, eingeschlossen werden.

Gemäß einer weiteren bevorzugten Ausgestaltung der Erfindung ist an den Bolzen auf der dem Tragteil zugewandten Seite des Bundes ein Stummel angeformt, der sich in eine dem Stummelquerschnitt entsprechende Ausnehmung des Tragteils erstreckt. Durch diesen Stummel können Querkräfte, die über das durch Reibschluß aufzunehmende Maß hinausgehen, auf das Tragteil übertragen werden. Der Stummel dient gleichzeitig der Positionierung und Zentrierung des Bolzens am Tragteil.

Eine weitere mit der Erfindung zu lösende Aufgabe wird darin gesehen, eine Pendellagerung für eine Fahrzeugachse mit einer schwenkbaren Bolzenverbindung anzugeben, die lediglich relativ geringe Wandstärken des den Bolzen aufnehmenden Bauteils erfordert und ohne Ausdistanzieren mittels Beilagscheiben eine einfache rasche Montage unter Einhaltung der geforderten Montagemaße ermöglicht.

Diese Aufgabe wird erfindungsgemäß durch die Verwendung einer Verbindung zwischen dem Bolzen und dem aufnehmenden Tragteil der erfindungsgemäßen Art gelöst. Eine derartige Verbindung ermöglicht eine einfache rasche Montage und Demontage des Bolzens und der Pendellagerung.

Bei bekannten Lagerungen ist gegebenenfalls das Ausdistanzieren einer zweiten Lagerstelle mittels Beilagscheiben erforderlich, da die freitragende (über die Tragteiloberfläche hinausragende) Bolzenlänge mit beim Einpressen auftretenden Montagetoleranzen behaftet ist. Bei der erfindungsgemäßen Pendellagerung ist die Toleranz der freitragenden Länge lediglich von der spanabhebenden Formgebung abhängig und damit ausreichend genau.

Wegen der hohen Belastung wird der Bolzen in der Regel oberflächengehärtet. Damit kann die dem Tragteil abgewandte Fläche des an dem Bolzen angeformten Bundes als Anlauffläche für das Lagerauge des angelenkten Bauteils dienen, ohne daß, wie bei bekannten Pendellagern üblich, ein gehärteter Anlaufring zwischengelegt werden muß.

Vorzugsweise sind zwei zueinander fluchtende, in Fahrzeuglängsrichtung ausgerichtete erfindungsgemäße Verbindungen vorgesehen, wobei wenigstens eine Verbindung eine am freien Ende des Zapfens befestigbare, über den Querschnitt des Zapfens hinausragende Scheibe enthält.

Ferner ist es von Vorteil, wenn die Bolzen am Achsträger befestigt und ihre Zapfen zur Fahrzeugrückseite ausgerichtet sind. Auf die Zapfen lassen sich Büchsen stecken. Der Achskörper enthält Lageraugen, die sich über die Büchsen schieben lassen.

Weitere vorteilhafte Ausgestaltungen und Weiterbildungen der Erfindung gehen aus den Unteransprüchen hervor.

Anhand der Zeichnung, die mehrere Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: den Teilschnitt durch eine erfindungsgemäße Verbindung zwischen einem Bolzen und einem Tragteil und
- Fig. 2: den Teilschnitt der erfindungsgemäßen Pendellagerung für eine Fahrzeugachse mit zwei alternativen erfindungsgemäßen Bolzen-Fahrzeugchassis-Verbindungen.

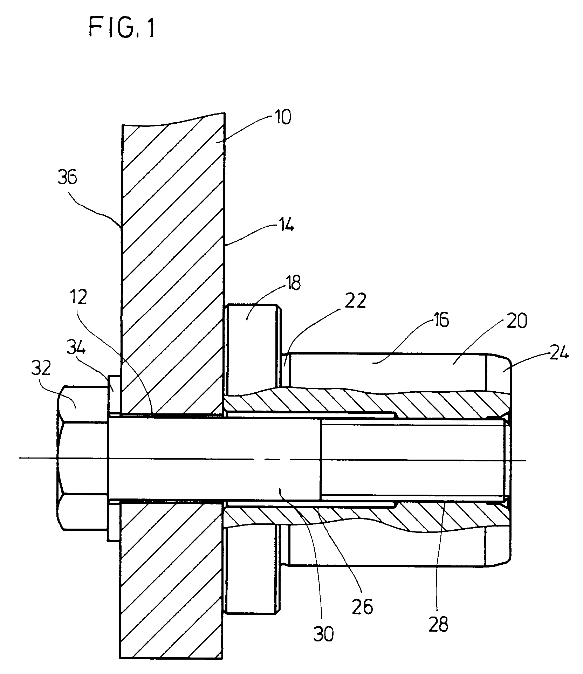

In Fig. 1 ist der Teilbereich eines als Tragteil dienenden Gehäuses 10, Flansches oder dergleichen mit einer Durchgangsbohrung 12 dargestellt, an dessen einer Seite 14 eine Stirnfläche eines rotationssymmetrischen, mit der Durchgangsbohrung 12 fluchtenden Bolzens 16 anliegt. Der Bolzen 16 besteht im wesentlichen aus einem Bund 18 und einem Zapfen 20. Zwischen Bund 18 und Zapfen 20 befindet sich ein Freistich 22. Das freie Ende des Zapfens 20 ist mit einer kegelstumpfförmigen Phase 24 versehen, die das Einführen des Zapfens 20 in die Bohrung eines nicht dargestellten Bauteils, welches auf dem Zapfen 20 des Bolzens 16 verdrehbar gelagert werden kann, erleichtert.

Der Bolzen 16 weist eine axiale Bohrung auf, die in einen zylindrischen Abschnitt 26 und einen Gewindeabschnitt 28 unterteilt ist. Der Gewindeabschnitt 28 befindet sich im Bereich des freien Endes des Zapfens 20. Durch die Durchgangsbohrung 12 des Gehäuses 10 und die Bohrung des Bolzens 16 erstreckt sich eine Schraube 30, die in den Gewindeabschnitt 28 eingedreht ist. Der Schraubenkopf 32 stützt sich über eine Unterlegscheibe 34 an der dem Bolzen 16 abgewandten Fläche 36 des Gehäuses 10 ab.

Bei der Schraube 30 handelt es sich um eine hochfeste, hohe Zugkräfte aufnehmende Schraube. Durch sie wird die dem Zapfen 20 abgewandte Stirnfläche des Bundes 18 gegen die Seite 14 des Gehäuses 10 gepreßt. Der als Anlagefläche dienende Bereich dieser Seite 14 des Gehäuses 10 kann mechanisch bearbeitet sein, um eine paßgenaue Anlage des Bolzens 16 zu gewährleisten.

Eine hohe Zugspannung der Schraube 30 führt zu einem hohen Anlagedruck zwischen Bund 18 und Gehäuse 10. Dieser Anlagedruck bewirkt einen guten Reibschluß zwischen Bund 18 und Gehäuse 10, der die Aufnahme hoher Querkräfte, die von dem nicht gezeigten Bauteil auf den Bolzen 16 übertragen werden, erlaubt. Die auftretenden Momente stützen sich über den Bund 18 als Normalkräfte an der Seite 14 der Tragplatte 10 ab. Dabei gilt, je größer der Durchmesser des Bundes 18, desto größer die übertragbaren Momente.

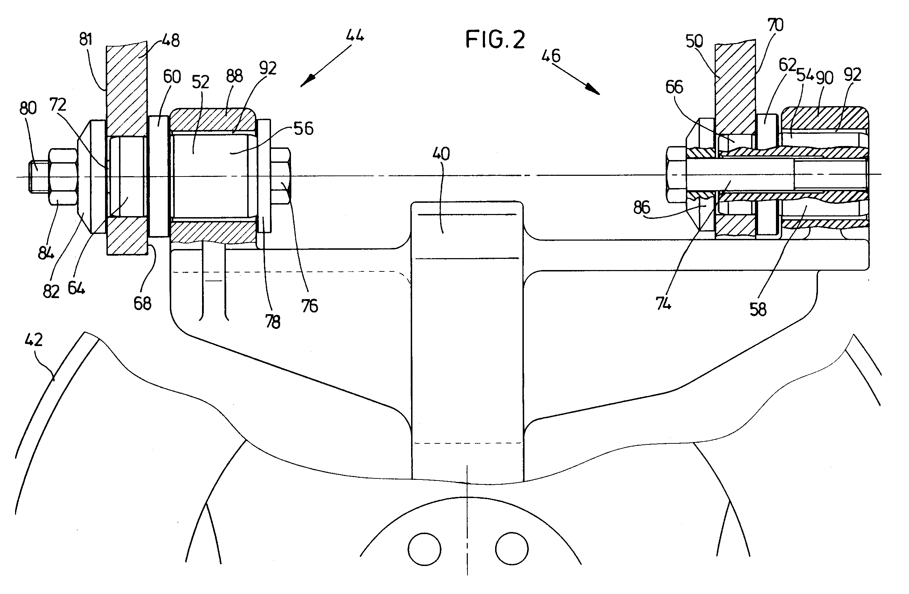

Aus der Fig. 2 geht eine Pendellagerung für die lenkbare Vorderachse eines Ackerschleppers hervor, die in einem längs zur Fahrtrichtung verlaufenden Schnitt gezeigt ist. Das Vorderachsmittelstück 40, welches mit den Vorderrädern 42 des nicht näher dargestellten Ackerschleppers in Verbindung steht, stützt sich über zwei erfindungsgemäße Verbindungen 44 und 46 an zwei Laschen 48, 50 ab, die Teil eines nicht näher dargestellten Vorderachsträgers und somit des Fahrzeugchassis sind.

Die Verbindungen 44, 46 enthalten je einen konzentrisch ausgebildeten Bolzen 52, 54, die im wesentlichen aus drei Abschnitten, nämlich einem Zapfen 56, 58, einem Bund 60, 62 und einem Stummel 64, 66 aufgebaut sind, wobei Zapfen 56, 58 und Stummel 64, 66 jeweils auf gegenüberliegenden Seiten des Bundes 60, 62 liegen. Die Stummel 64, 66 sind jeweils in eine Durchgangsbohrung der zugehörigen Lasche 48, 50 eingesteckt. Dabei liegt die dem Stummel 64, 66 zugewandte Stirnfläche des Bundes 60, 62 gegen die Seitenfläche 68, 70 der Lasche 48, 50 an.

Durch den vorderen Bolzen 52 erstreckt sich eine nicht gezeigte, durchgehende, axiale, zylindrische Bohrung, die den Schaft einer Schraube 72 aufnimmt. Der hintere Bolzen 54 ist hinsichtlich seiner Durchgangsbohrung ähnlich gestaltet wie es anhand der Fig. 1 beschrieben wurde. In seinem Gewindeabschnitt ist eine Schraube 74 eingedreht. Die Schrauben 72, 74 dienen der Befestigung der Bolzen 52, 54 an den Laschen 48, 50.

Bei der vorderen Verbindung 44 stützt sich der Schraubenkopf 76 an einer Scheibe 78 ab, die an der freien Stirnfläche des Zapfens 56 anliegt und deren Außendurchmesser größer ist als der Durchmesser des Zapfens 56. Das Gewindeende 80 der Schraube 72 ragt über die dem Bolzen 52 abgewandte Seite 81 der Lasche 48 hinaus und trägt eine Druckscheibe 82 und eine Mutter 84. Durch Anziehen der Mutter 84 wird der Stummel 64 des Bolzens 52 in die Durchgangsbohrung der Lasche 48 gezogen und die Lasche 48 zwischen dem Bund 60 und der Druckscheibe 82 eingespannt.

Bei der hinteren Verbindung 46 ist die Schraubverbindung zwischen Lasche 50 und Bolzen 54 ähnlich wie bei der Ausführung gemäß Fig. 1 gestaltet. Im Unterschied zu Fig. 1 befindet sich hier an Stelle der Unterlegscheibe 34 eine Druckscheibe 86, so daß die Lasche 50 zwischen Druckscheibe 86 und Bund 62 des Bolzens 54 eingespannt ist.

Das Vorderachsmittelstück 40 trägt ein vorderes nach oben gerichtetes Lagerauge 88 und ein hinteres nach oben gerichtetes Lagerauge 90. Die zylindrischen Durchgangsbohrungen beider Lageraugen 88, 90, in die Lagerbüchsen 92 eingepaßt sind, fluchten miteinander und sind in Fahrtrichtung des Ackerschleppers ausgerichtet. In den Lagerbüchsen 92 sind die Zapfen 56, 58 des zugehörigen Bolzens 52, 54 drehbar gelagert.

Das vordere Lagerauge 88 liegt zwischen dem Bund 60 des vorderen Bolzens 52 und der Scheibe 78. Ein geringes axiales Spiel ermöglicht ein Verdrehen des Lagerauges 88 über dem Bolzen 52. Die Abstandsverhältnisse der Laschen 48, 50 und Lageraugen 88, 90 sind so gewählt, daß zwischen dem hinteren Lagerauge 90 und dem Bund 62 des zugehörigen Bolzens 54 ein ausreichender Abstand gegeben ist, durch den ein Anliegen des Lagerauges 90 am Bund 62 vermieden wird.

Die Stummel 64, 66 sind mit einer Gleit- oder auch Preßpassung in die Durchgangsbohrungen der Laschen 48, 50 eingepaßt, so daß nach Lösen der Schrauben 72, 74, die Bolzen 52, 54 aus den Laschen 48, 50 gezogen beziehungsweise mittels eines Dorns getrieben werden können. Sie dienen der Zentrierung der Bolzen 52, 54. Darüberhinaus sind sie in der Lage, von den Lageraugen 88, 90 auf die Bolzen 52, 54 übertragene Querkräfte, die über das durch Reibschluß aufzunehmende Maß hinausgehen, auf die Laschen 48, 50 weiterzuleiten.

Der Durchmesser der Druckscheiben 82, 86 ist größer als der der Stummel 64, 66 und fast so groß wie der Durchmesser der Bünde 60, 62. Die Druckscheiben 82, 86 dienen der großflächigen Krafteinleitung der von den Schrauben 72, 74 aufgebrachten Zugkraft in die Laschen 48, 50.

Zur Montage der Vorderachse am Schlepperrumpf wird zunächst der hintere Bolzen 54 an der Lasche 50 befestigt, indem sein Stummel 66 in die Durchgangsbohrung der Lasche 50 eingeführt und dann die Schraube 74 in den Bolzen 54 eingeschraubt wird. Hierauf wird der vordere Bolzen 52 mit seinem Stummel 64 in die Durchgangsbohrung der vorderen Lasche 48 eingesetzt, ohne ihn jedoch zu verschrauben. Die Vorderachse wird in ihre Einbaulage gebracht, und die Lageraugen 88, 90, in die die Lagerbüchsen 92 eingesetzt sind, werden über die Zapfen 56, 58 geschoben. Nun wird die Schraube 72 mit der Scheibe 78 und der Druckscheibe 82 eingesetzt, und durch Festziehen der Mutter 84 wird der Bolzen 52 an der Lasche 48 befestigt.

Die Demontage erfolgt in umgekehrter Reihenfolge, wobei jedoch in der Regel der hintere Bolzen 54 nicht von der Lasche 50 demontiert zu werden braucht. Für die Montage sind keine Distanzierungsmittel wie Beilagscheiben erforderlich. Als Werkzeug für die Montage wird lediglich ein gewöhnlicher Schraubenschlüssel benötigt.

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Verbindung zwischen einem Bolzen (16, 52, 54) und einem Tragteil (10, 48, 50), wobei wenigstens ein Teil des Bolzens (16, 52, 54) über die Oberfläche (14, 68, 70) des Tragteils (10, 48, 50) hinausragt und zur Aufnahme wenigstens eines Bauteils (88, 90), durch das im wesentlichen quer zur Bolzenachse wirkende Kräfte einleitbar sind, geeignet ist, dadurch gekennzeichnet, daß der Bolzen (16, 52, 54) einen Bund (18, 60, 62) enthält, dessen zum Tragteil (10, 48, 50) gewandte Fläche mittels einer Schraubverbindung gegen eine Oberfläche (14, 68, 70) des Tragteils (10, 48, 50) gepreßt wird, wobei die Schraubverbindung eine zentral im Bolzen (16, 52, 54) verlaufende und mit dem Tragteil (10, 48, 50) zusammenwirkende Schraube (30, 72, 74) aufweist.

2. Verbindung nach Anspruch 1, dadurch gekennzeichnet, daß der Bolzen (16, 52, 54) einen zylindrischen Zapfen (20, 56, 58) zur Aufnahme des Bauteils (88, 90) enthält.

3. Verbindung nach Anspruch 1 oder 2, dadurch gekennzeichnet, daß die Schraube (30, 74) sich durch eine Ausnehmung des Tragteils (10, 50) erstreckt und der Schraubenkopf (32) sich an der Rückseite des Tragteils (10, 50) abstützt und daß die Schraube (30, 74) in einen Gewindeabschnitt (28) des Bolzens (16, 54) einschraubbar ist.

4. Verbindung nach Anspruch 1 oder 2, dadurch gekennzeichnet, daß die Schraube (72) sich durch eine Ausnehmung des Bolzens (52) und des Tragteils (48) erstreckt und sich über den Schraubenkopf (76) und eine auf die Schraube (72) aufschraubbare Mutter (84) an dem freien Ende des Bolzens (52) einerseits und der Rückseite (81) des Tragteils (48) andererseits abstützt.

5. Verbindung nach einem der Ansprüche 1 bis 4, dadurch gekennzeichnet, daß zwischen der Rückseite (81) des Tragteils (48, 50) und dem Schraubenkopf bzw. der Mutter (80) eine Scheibe (82, 86) angeordnet ist und daß die an dem Tragteil (48, 50) anliegende Fläche der Scheibe (82, 86) in etwa gleich groß ist wie die an dem Tragteil (48, 50) anliegende Bundfläche.

6. Verbindung nach einem der Ansprüche 1 bis 5, dadurch gekennzeichnet, daß mit der Schraube (72) am freien Ende des Bolzens (52) eine über den Bolzenquerschnitt hinausragende Scheibe (78) befestigbar ist.

7. Verbindung nach einem der Ansprüche 1 bis 6, dadurch gekennzeichnet, daß der Bolzen (52, 54) auf der dem Tragteil (48, 50) zugewandten Seite des Bundes (60, 62) einen Stummel (64, 66) trägt, der sich in eine dem Stummelquerschnitt entsprechende Ausnehmung des Tragteils (48, 50) erstreckt.

8. Pendellagerung für eine Fahrzeugachse, insbesondere für die Vorderachse eines landwirtschaftlichen oder Nutzfahrzeuges, mit wenigstens einer zwischen einem Achsträger (48, 50) des Fahrzeuges und der Fahrzeugachse (40) angeordneten schwenkbaren Bolzenverbindung (44, 46), bei der ein Bolzen (52, 54) starr mit dem Achsträger (48, 50) oder mit der Fahrzeugachse verbunden ist und in eine Ausnehmung der Fahrzeugachse oder des Achsträgers eingreift, dadurch gekennzeichnet, daß die Verbindung (44, 46) des Bolzens (52, 54) mit dem Achsträger (48, 50) oder mit der Fahrzeugachse eine Verbindung gemäß einem der Ansprüche 1 bis 7 ist.

9. Pendellagerung nach Anspruch 8, dadurch gekennzeichnet, daß zwei zueinander fluchtende in Fahrzeuglängsrichtung ausgerichtete Verbindungen (44, 46) vorgesehen sind und daß wenigstens eine Verbindung (44) eine am freien Ende des Zapfens (56) befestigbare, über den Querschnitt des Zapfens (56) hinausragende Scheibe (78) enthält.

10. Pendellagerung nach Anspruch 8 oder 9, dadurch gekennzeichnet, daß die Bolzen (52, 54) am Achsträger befestigt und ihre Zapfen (56, 58) zur Fahrzeugrückseite ausgerichtet sind, daß auf den Zapfen (56, 58) Büchsen (92) angeordnet sind und daß der Achskörper (40) Bohrungen enthält, die sich über die Büchsen (92) schieben lassen.
